# EUROPEAN PATENT APPLICATION

(11) **EP 4 560 472 A1**
(43) Date of publication of application: **28.05.2025**
(21) Application number: 24211005.4
(22) Date of filing: 05.11.2024
(51) Int. Cl.: G06F 9/48, G06F 9/54, H04L 41/044, H04L 41/00

(54) **METHOD, APPARATUS FOR BATCH MANAGEMENT OF DEVICES, AND ELECTRONIC DEVICE AND MACHINE-READABLE STORAGE MEDIUM**

(30) Priority: 24.11.2023 CN 202311591218
(71) Applicant: New H3C Technologies Co., Ltd., Hangzhou, Zhejiang 310052 (CN)
(72) Inventor: CHEN, Shuibin, Beijing, 100102 (CN)
(74) Representative: IPAZ

(57) **Abstract**

Disclosed are a method and apparatus for batch management of devices, a device, and machine-readable storage medium. The method includes: receiving a merging instruction sent by a superior management node; parsing the merging instruction to obtain the instruction information and a list of instruction-executing devices; and issuing execution instructions to all devices listed in the list of instruction-executing devices, which includes and only includes local devices and/or subordinate managed devices managed by the local devices, based on the instruction information and the list of instruction-executing devices. Through the technical solution disclosed, the subordinate management nodes send, to the subordinate managed devices managed by the subordinate management nodes, execution instructions generated by parsing the merging instruction sent by the superior management node, thereby sharing the load of issuing execution instructions to the subordinate managed devices managed by the subordinate management nodes to the subordinate management nodes.

## Description

### TECHNICAL FIELD

The present disclosure relates to the technical field of communication, particularly to a method, apparatus for batch management of devices, and an electronic device and machine-readable storage medium.

### BACKGROUND

As the scale of enterprise networks gradually expands, the number of application services increases, and data volumes grow exponentially, a large amount of server devices are often deployed inside enterprises. Each server needs to be configured, monitored and maintained independently, which increases the difficulty and complexity of management.

In one solution, since the service platform management software HDM/HDM2 runs on the BMC chip of the server, considering the performance of the BMC chip and in order not to affect the normal operation of other functions on the BMC chip, the joint management function running on the service platform management software HDM/HDM2 can currently only provide the management of 200 devices at most.

### SUMMARY

In view of this, the present disclosure provides a method, apparatus for batch management of devices, and an electronic device and machine-readable storage medium to improve the issue of not supporting the joint management of ultra-large-scale devices clusters.

The technical solutions are as follows.

The present disclosure provides a method for batch management of devices, applied to a management node. The method includes: receiving a merging instruction sent by a superior management node, wherein the merging instruction includes instruction information and a list of instruction-executing devices. The list of instruction-executing devices is generated by the superior management node based on first subordinate management nodes to which the merging instruction is to be sent and first subordinate managed devices managed by the first subordinate management nodes. The superior management node manages a plurality of first subordinate management nodes, and each of the first subordinate management nodes manages a plurality of first subordinate managed devices; parsing the merging instruction to obtain the instruction information and the list of instruction-executing devices; and issuing execution instructions to all devices listed in the list of instruction-executing devices, including and only including local devices and/or first subordinate managed devices managed by the local devices, based on the instruction information and the list of instruction-executing devices. The execution instructions are to cause the devices receiving the execution instructions to execute services associated with the execution instructions.

As a technical solution, after issuing execution instructions to all the devices listed in the list of instruction-executing devices, including and only including the local devices and/or the first subordinate managed devices managed by the local devices, based on the instruction information and the list of instruction-executing devices, the method further includes: aggregating execution results obtained from execution of the services based on the execution instructions by the devices receiving the execution instructions to generate execution result information, and feeding back the execution result information to the superior management node.

As a technical solution, parsing the merging instruction to obtain the instruction information and the list of instruction-executing devices includes: in response to the list of instruction-execution devices includes second subordinate management nodes with second subordinate managed devices besides the local devices, generating a list of subordinate execution devices based on the second subordinate management nodes and the second subordinate managed devices managed by the second subordinate management nodes, generating a subordinate merging instructions based on the list of subordinate execution devices and the instruction information, and sending a corresponding subordinate merging instruction to the subordinate management nodes.

As a technical solution, receiving execution results obtained from execution of the services based on the execution instruction by the devices receiving the execution instructions to generate first execution result information, and receiving subordinate execution result information generated by the second subordinate management nodes after aggregating execution result obtained from execution of the services based on the execution instruction by the subordinate devices receiving the execution instruction from the second subordinate management nodes, aggregating the first execution result information and the subordinate execution result information to generate second execution result information, and feeding back the second execution result information to the superior management node.

The present disclosure also provides an apparatus for batch management of devices, applied to a management node. The apparatus includes: a first module, to receive a merging instruction sent by a superior management node, wherein the merging instruction includes instruction information and a list of instruction-executing devices. The list of instruction-executing devices is generated by the superior management node based on first subordinate management nodes to which the merging instruction is to be sent and first subordinate managed devices managed by the first subordinate management nodes. The superior management node manages a plurality of first subordinate management nodes, and each of the first subordinate management nodes manages a plurality of first subordinate managed devices; a second module, to parse the merging instruction to obtain the instruction information and the list of instruction-executing devices; and a third module to issue execution instructions to all devices listed in the list of instruction-executing devices, including and only including local devices and/or first subordinate managed devices managed by the local devices, based on the instruction information and the list of instruction-executing devices. The execution instructions are to cause the devices receiving the execution instructions to execute services based on the execution instructions.

As a technical solution, after issuing, by the third module, the execution instructions to all the devices listed in the list of instruction-executing devices, including and only including the local devices and/or the first subordinate managed devices managed by the local devices, based on the instruction information and the list of instruction-executing devices, the third module is further to: aggregate execution results obtained from execution of the services based on the execution instruction by the devices receiving the execution instructions to generate execution result information, and feedback the execution result information to the superior management node.

As a technical solution, parsing the merging instruction to obtain the instruction information and the list of instruction-executing devices includes: in response to the list of instruction-executing devices includes second subordinate management nodes with second subordinate managed devices besides the local devices, generating a list of subordinate execution devices based on the second subordinate management nodes and the second subordinate managed devices managed by the second subordinate management nodes, generating a subordinate merging instruction based on the list of subordinate execution devices and the instruction information, and sending a corresponding subordinate merging instruction to the subordinate management nodes.

As a technical solution, the third module is also to: receive execution result obtained from execution of the services based on the execution instruction by the devices receiving the execution instructions to generate first execution result information, and receive subordinate execution result information generated by the second subordinate management nodes after aggregating execution result obtained from execution of the services based on the execution instruction by the subordinate device receiving the execution instruction from the second subordinate management nodes, aggregate the first execution result information and the subordinate execution result information to generate second execution result information, and feedback the second execution result information to the superior management node.

The present disclosure also provides an electronic device, including a processor and a machine-readable storage medium. The machine-readable storage medium has stored therein machine-executable instructions that can be executed by the processor. The processor executes the machine-executable instructions to implement the aforementioned method for batch management of devices.

The present disclosure also provides a machine-readable storage medium having stored therein machine-executable instructions, which, when been invoked and executed by a processor, causes the processor to implement the aforementioned method for batch management of devices.

The aforementioned technical solutions provided by the present disclosure bring at least the following beneficial effects.

The subordinate management node sends, to the subordinate managed devices it manages, execution instructions generated by parsing merging instructions sent by the superior management node, thereby sharing the load of issuing execution instructions to subordinate managed devices managed by the subordinate management nodes to the subordinate management nodes. This allows the superior management node to manage several subordinate management nodes that each manages a plurality of subordinate managed devices, without increasing the load pressure on the BMC, which significantly increases the number of device that can be jointly managed by a single superior management node.

### BRIEF DESCRIPTION OF THE DRAWINGS

In order to more clearly illustrate the technical solutions in the embodiments of the present disclosure or the prior art, a brief introduction of the drawings required for describing the embodiments of the present disclosure or the prior art are provided. It is apparent that the drawings in the following description merely illustrate some embodiments recorded in the present disclosure. For those skilled in the art, other drawings can also be obtained based on these drawings of the embodiments of the present disclosure.
Figure 1 is a flowchart of a method for batch management of devices according to an example of the present disclosure;
Figure 2 is a structural diagram of an apparatus for batch management of devices according to an example of the present disclosure;
Figure 3 is a diagram of the hardware structural of an electronic device according to an example of the present disclosure.

Reference numerals in the drawings: the first module 21, the second module 22, the third module 23.

### DETAILED DESCRIPTION

The terms used in the embodiments of the present disclosure are for the purpose of describing specific embodiments, and are not intended to limit the present disclosure. The singular forms "a," "said," and "the" used in the present disclosure and the claims are also intended to include plural forms, unless the context clearly indicates otherwise. It should also be understood that the term "and/or" used herein refers to any or all possible combinations of a plurality of associated listed items.

It should be understood that although terms such as first, second, third, etc. may be used in the embodiments of the present disclosure to describe various information, these terms should not be limited to such descriptions. These terms are merely used to distinguish information of the same type from each other. For example, without departing from the scope of the present disclosure, first information can also be referred to as second information, and similarly, second information can also be referred to as first information. Depending on the context, the word "if' can be interpreted as "when" or "in response to determining" .

In related arts, the joint management function operating on the service platform management software HDM/HDM2 may provide a maximum management capability of only 200 devices, lacking support for the joint management of larger-scale devices clusters. The present disclosure provides a method, apparatus, and electronic device for batch management of devices, as well as a machine-readable storage medium. A superior management node may manage a plurality of subordinate management nodes that each manages a plurality of subordinate managed devices, so that the number of devices that can be jointly managed by a single superior management node is significantly increased.

The technical solutions are described below.

In one example, the present disclosure provides a method for batch management of devices, which is applied to a management node. The method includes: receiving a merging instruction sent by a superior management node, wherein the merging instruction includes instruction information and a list of instruction-executing devices, the list of instruction-executing devices is generated by the superior management node based on first subordinate management nodes to which the merging instruction is to be sent and first subordinate managed devices managed by the first subordinate management nodes, the superior management node manages a plurality of first subordinate management nodes, and each of the first subordinate management nodes manages a plurality of subordinate managed devices; parsing the merging instruction to obtain the instruction information and the list of instruction-executing devices; and issuing execution instructions to all devices listed in the list of instruction-executing devices, which include and only include local devices and/or first subordinate managed devices managed by the local devices, according to the instruction information and the list of instruction-executing devices, the execution instructions are used to cause the devices receiving the execution instructions to execute services associated with the execution instructions.

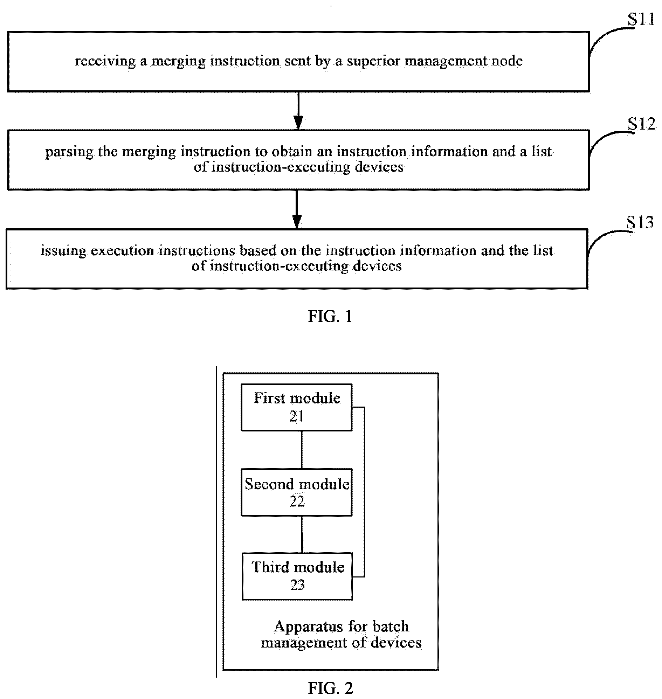

In one example, as shown in Figure 1, the method includes the following steps:

Step S 11: receiving a merging instruction sent by a superior management node.

Step S12: parsing the merging instruction to obtain an instruction information and a list of instruction-executing devices.

Step S13: issuing execution instructions to all devices listed in the list of instruction-executing devices, which include and only include local devices and/or first subordinate managed devices managed by the local devices, based on the instruction information and the list of instruction-executing devices.

The subordinate management nodes send, to the subordinate managed devices they manage, execution instructions generated by parsing the merging instructions sent by the superior management node, thereby sharing the load of issuing execution instructions to the subordinate managed devices managed by the subordinate management nodes to the subordinate management nodes, allowing the superior management node to manage a plurality of subordinate management nodes that each manages a plurality of subordinate managed devices without increasing the load pressure on the BMC, which greatly increases the number of devices that can be jointly managed by a single superior management node.

In one example, after issuing the execution instructions to all the devices listed in the list of instruction-executing devices, which include and only include the local devices and/or the first subordinate managed devices managed by the local devices, based on the instruction information and the list of instruction-executing devices, the method further includes: aggregating execution results obtained from execution of the services based on the execution instructions by the devices receiving the execution instructions to generate execution result information, and feeding back the execution result information to the superior management node.

In one example, parsing the merging instruction to obtain instruction information and the list of instruction-executing devices includes: in response to the list of instruction-executing devices including second subordinate device nodes with second subordinate managed devices besides the local devices, generating a list of subordinate execution devices based on the second subordinate management nodes and the second subordinate managed device managed by the second subordinate management node, generating a subordinate merging instruction based on the list of subordinate execution devices and the instruction information, and sending a corresponding subordinate merging instruction to the subordinate management nodes.

In one example, receiving execution results obtained from execution of the services based on the execution instruction by the devices receiving the execution instructions to generate execution first result information, and receiving subordinate execution result information generated by the second subordinate management nodes after aggregating execution result obtained from execution of the services based on the execution instruction by the subordinate devices receiving the execution instruction from the second subordinate management nodes, aggregating the first execution result information and the subordinate execution result information to generate second execution result information, and feeding back the second execution result information to the superior management node.

In related arts, a single server may support the management of 200 server devices at maximum. Therefore, two servers can support the management of 400 server devices at maximum. If tasks need to be issued in batches to all the server devices within the management network, operations need to be performed on two management servers to issue tasks in batches. It's obviously that the effect of expanding the joint management function is not achieved.

At this point, if another management server is added as a primary management node to manage the aforementioned two management servers, and the original two management servers serves as secondary management nodes to manage the subordinate managed devices of which, when the primary management node sends instructions to the managed devices subordinate of the secondary management nodes, it needs to first send the instructions to the secondary management devices, which then forward the instructions to the corresponding managed devices. In this way, issuing task in batches to all the server devices in the management network only requires to operate on the primary management node. The primary management node manages a total of 402 (2 secondary management nodes + 2 * 200) devices. By analogy, in response to the primary management node having 200 secondary management nodes, and each secondary management node also having200 managed devices, then the primary management node can support up to 40,200 devices, which achieves the effect of expanding the joint management. However, according to the above expansion solution, the loads of all managed devices in the management network topology still falls on the primary management node, so when the number of devices in the entire management network exceeds 200, the normal operation of other services on the BMC will be affected.

In one example, in view of the case that the primary management node sends the same instruction message to the managed devices sequentially in the case of batch management, the number of packets sent by the primary management node can be decreased by merging a control instruction to reduce the load on the primary management node. Merging control instructions involves adding a control instruction (i.e., a merging instruction), the content of the merging instruction includes the merging instructions and member information for executing the instructions. When the primary management node issues instructions in batches to a certain secondary management node and the subordinate managed devices of which, it packages the original instructions and execution members into a merging instruction. After receiving the instruction, in response to determining it is a merging instruction, the secondary management node parses the instruction to obtain the original instructions and execution members, then sequentially issues instructions to itself and the subordinate managed devices of which, and finally aggregates the execution results of all the execution members to return to the primary management node. In this way, when issuing instructions in batches to all the managed devices in the management network topology, the primary management node only needs to send a maximum of 200 packets, and the load of management of the subordinate devices of the secondary management devices is borne by the corresponding secondary management devices.

In one example, as shown in Figure 2, the present disclosure also provides an apparatus for batch management of devices, applied to a management node. The apparatus includes: a first module for receiving a merging instruction sent by a superior management node, wherein the merging instruction includes instruction information and a list of instruction-executing devices, and the list of instruction-executing devices is generated by the superior management node based on first subordinate management nodes to which the merging instruction will be sent and first subordinate managed devices managed by the first subordinate management nodes, the superior management node manages a plurality of first subordinate management nodes, and each of the first subordinate management nodes manages a plurality of first subordinate managed devices; a second module for parsing the merging instruction to obtain the instruction information and the list of instruction-executing devices; and a third module for issuing execution instructions to all devices listed in the list of instruction-executing devices, including and only including local devices and/or first subordinate managed devices managed by the local devices, based on the instruction information and the list of instruction-executing devices, wherein the execution instructions are to cause the devices receiving the execution instructions to execute the services associated with the execution instructions.

In one example, after issuing, by the third module, the execution instructions to all the devices listed in the list of instruction-executing devices, including and only including the local devices and/or the first subordinate managed devices managed by the local devices, based on the instruction information and the list of instruction-executing devices, the third module is further used for: aggregating execution results obtained from execution of the services according to the execution instruction by the devices receiving the execution instructions to generate execution result information , and feeding back the execution result information to the superior management node.

In one example, parsing the merging instruction to obtain the instruction information and the list of instruction-executing devices includes: in response to the list of instruction-executing devices including second subordinate management nodes with second subordinate managed devices besides the local devices, generating a list of subordinate executing devices based on the second subordinate management nodes and the subordinate managed devices managed by the second subordinate management nodes, generating a subordinate merging instruction based on the list of subordinate executing devices and the instruction information, and sending a corresponding subordinate merging instruction to the subordinate management nodes.

In one example, the third module is also used for receiving execution result obtained from execution of the services based on the execution instruction by the devices receiving the execution instructions to generate first execution result information, and receiving subordinate execution result information generated by the second subordinate management nodes after aggregating the execution result obtained from execution of the services based on the execution instruction by the subordinate device receiving the execution instruction from the second subordinate management nodes, aggregating the first execution result information and the subordinate execution result information to generate second execution result information, and feeding back the second execution result information to the superior management node.

The apparatus embodiments are the same as or similar to the corresponding method embodiments and will not be repeated here.

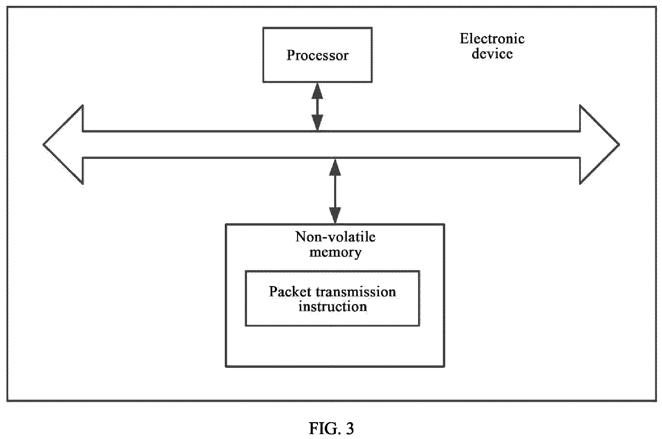

In one example, the present disclosure provides an electronic device including a processor and a machine-readable storage medium. The machine-readable storage medium has stored therein machine-executable instructions that can be executed by the processor. The processor executes the machine-executable instructions to implement the aforementioned method for batch management of devices. From a hardware perspective, the schematic diagram of the hardware architecture can be seen in Figure 3.

In one example, the present disclosure provides a machine-readable storage medium having stored therein machine-executable instructions, which, when been invoked and executed by a processor, causes the processor to implement the aforementioned method for batch management of devices.

The machine-readable storage medium can be any electronic, magnetic, optical, or other physical storage device capable of containing or storing information, such as executable instructions, data, and so on. For example, the machine-readable storage medium can be a RAM (Random Access Memory), a volatile memory, a non-volatile memory, a flash memory, storage drives (such as hard disk drives), solid-state drives, any type of storage discs (such as CDs, DVDs, etc.), or similar storage media, or combinations of them.

The systems, devices, modules, or units described in the aforementioned examples can be specifically implemented by computer chips or entities, or by products with certain functions. A typical implementation device is a computer, which can specifically be in the form of a personal computer, a laptop, a cellular phone, a camera phone, a smartphone, a personal digital assistant, a media player, a navigation device, an email receiving and sending device, a game console, a tablet computer, a wearable device, or any combination of these devices.

For convenience of description, the above devices are described separately in terms of their functions as various units. Of course, when implementing the present disclosure, the functions of each unit can be implemented in one or more software and/or hardware.

Those skilled in the art should understand that the embodiments of the present disclosure can be provided as methods, systems, or computer program products. Therefore, the present disclosure can take the form of a purely hardware embodiment, a purely software embodiment, or an embodiment combining software and hardware aspects. Furthermore, the embodiments of the present disclosure can take the form of a computer program product implemented on one or more computer-usable storage media (including but not limited to a disk storage, a CD-ROM, an optical storage, etc.) containing computer-usable program codes.

The present disclosure is described with reference to schematic diagrams and/or block diagrams of the method, apparatus (systems), and computer program product according to embodiments of the present disclosure. It should be understood that each flow and/or block in the schematic diagrams and/or block diagrams, as well as combinations of the flows and/or blocks in the schematic diagrams and/or block diagrams, can be implemented by computer program instructions. These computer program instructions can be provided to a processor of a general-purpose computer, a special-purpose computer, an embedded processor, or other programmable data processing devices to produce a machine, such that the instructions executed by the processor of the computer or other programmable data processing devices produce a means for implementing the functions specified in one or more flows in the flowchart and/or one or more blocks in the block diagram.

Moreover, these computer program instructions can also be stored in a computer-readable memory that can direct a computer or other programmable data processing devices to operate in a specific method, such that the instructions stored in the computer-readable memory produce a manufacture including instruction means that implement the functions specified in one flow or multiple flows in the flowchart and/or one block or multiple blocks in the block diagram.

These computer program instructions can also be loaded onto a computer or other programmable data processing devices, such that a series of operational steps are executed on the computer or other programmable devices to produce computer-implemented processing, thereby providing steps for implementing the functions specified in one flow or multiple flows in the schematic diagram and/or one block or multiple blocks in the block diagram when the instructions executed on the computer or other programmable devices.

The above description is only the examples of the present disclosure and is not used to limit the present disclosure. For those skilled in the art, the present disclosure can have various modifications and variations. Any modifications, equivalent substitutions, improvements, etc., made within the spirit and principles of the present disclosure should be included within the scope of the claims of the present disclosure.

## Claims

1. A method for batch management of devices, applied to a management node, and the method comprises:
receiving a merging instruction sent by a superior management node, wherein the merging instruction comprises instruction information and a list of instruction-executing devices, and the list of instruction-executing devices is generated by the superior management node based on first subordinate management nodes to which the merging instruction is to be sent and first subordinate managed devices managed by the first subordinate management nodes, and the superior management node manages a plurality of first subordinate management nodes, each of the first subordinate management nodes manages a plurality of first subordinate managed devices;
parsing the merging instruction to obtain the instruction information and the list of instruction-executing devices;
issuing execution instructions to all devices listed in the list of instruction-executing devices, comprising and only comprising local devices and/or first subordinate managed devices managed by the local devices, based on the instruction information and the list of instruction-executing devices, wherein the execution instructions are to cause the devices receiving the execution instructions to execute services associated with the execution instructions.

2. The method according to claim 1, wherein after issuing the execution instructions to all the devices listed in the list of instruction-executing devices, comprising and only comprising the local devices and/or the first subordinate managed devices managed by the local devices, based on the instruction information and the list of instruction-executing devices, the method further comprises:
aggregating execution results obtained from execution of the services based on the execution instructions by the devices receiving the execution instructions to generate execution result information, and feeding back the execution result information to the superior management node.

3. The method according to claim 1, wherein parsing the merging instruction to obtain the instruction information and the list of instruction-executing devices comprises:
in response to the list of instruction-executing devices comprising second subordinate management nodes with second subordinate managed devices besides the local devices, generating a list of subordinate execution devices based on the second subordinate management nodes and the second subordinate managed devices managed by the second subordinate management nodes, generating a subordinate merging instruction based on the list of subordinate execution devices and the instruction information, and sending a corresponding subordinate merging instruction to the subordinate management nodes.

4. The method according to claim 3, wherein receiving execution results obtained from execution of the services based on the execution instruction by the devices receiving the execution instructions to generate first execution result information, and receiving subordinate execution result information generated by the second subordinate management nodes after aggregating execution result obtained from execution of the services based on the execution instruction by the subordinate devices receiving the execution instruction from the second subordinate management nodes, aggregating the first execution result information and the subordinate execution result information to generate second execution result information, and feeding back the second execution result information to the superior management node.

5. An apparatus for batch management of devices, applied to a management node, wherein the apparatus comprises:
a first module, to receive a merging instruction sent by a superior management node, wherein the merging instruction comprises instruction information and a list of instruction-executing devices, and the list of instruction-executing devices is generated by the superior management node based on first subordinate management nodes to which the merging instruction is to be sent and first subordinate managed devices managed by the first subordinate management nodes, and the superior management node manages a plurality of first subordinate management nodes, each of the first subordinate management nodes manages a plurality of first subordinate managed devices;
a second module, to parse the merging instruction to obtain the instruction information and the list of instruction-executing devices;
a third module to issue execution instructions to all devices listed in the list of instruction-executing devices, comprising and only comprising local devices and/or first subordinate managed devices managed by the local devices, based on the instruction information and the list of instruction-executing devices, wherein the execution instructions are to cause the devices receiving the execution instructions to execute services based on the execution instructions.

6. The apparatus according to claim 5, wherein after issuing, by the third module, the execution instructions to all the devices listed in the list of instruction-executing devices, comprising and only comprising the local devices and/or the first subordinate managed devices managed by the local devices, based on the instruction information and the list of instruction-executing devices, the third module is further to:
aggregate execution results obtained from execution of the services based on the execution instruction by the devices receiving the execution instructions to generate execution result information, and feedback the execution result information to the superior management node.

7. The apparatus according to claim 5, wherein parsing the merging instruction to obtain the instruction information and the list of instruction-executing devices comprises:
in response to the list of instruction-executing devices comprising second subordinate management nodes with second subordinate managed devices besides the local devices, generating a list of subordinate execution devices based on the second subordinate management nodes and the second subordinate managed devices managed by the second subordinate management nodes, generating a subordinate merging instruction based on the list of subordinate execution devices and the instruction information, and sending a corresponding subordinate merging instruction to the subordinate management nodes.

8. The apparatus according to claim 7, wherein the third module is also to: receive execution result obtained from execution of the services based on the execution instruction by the devices receiving the execution instructions to generate first execution result information, and receive subordinate execution result information generated by the second subordinate management nodes after aggregating execution result obtained from execution of the services based on the execution instruction by the subordinate device receiving the execution instruction from the second subordinate management nodes, aggregate the first execution result information and the subordinate execution result information to generate second execution result information, and feedback the second execution result information to the superior management node.

9. An electronic device comprising a processor and a machine-readable storage medium, wherein the machine-readable storage medium has stored therein machine-executable instructions that can be executed by the processor, and the processor executes the machine-executable instructions to implement the method according to any one of claims 1-4.

10. A machine-readable storage medium having stored therein machine-executable instructions, which, when been invoked and executed by a processor, causes the processor to implement the method according to any one of claims 1-4.
